# EUROPEAN PATENT APPLICATION

(11) **EP 2 476 606 A1**
(43) Date of publication of application: **18.07.2012**
(21) Application number: 10766115.9
(22) Date of filing: 08.09.2010
(51) Int. Cl.: B62J 35/00, B62J 37/00, B62K 11/04, B62K 11/08

(54) **MOTORCYCLE**

(30) Priority: 09.09.2009 ES 200930670
(71) Applicant: Implementing Technologies, S. L., 08021 Barcelona (ES)
(72) Inventor: SERRA ROQUETA, Josep, E-17220 Sant Feliu de Guíxols, Girona (ES)
(74) Representative: Gallego Jiménez, José Fernando
(86) International application number: PCT/IB2010/054040
(87) International publication number: WO 2011/030293

(57) **Abstract**

It comprises a chassis (2) and a fuel tank (10) consisting of an elongated body (12) arranged at a front location and under the chassis (2) and inclined at an angle (α) between 60 and 70º, a radiator (20) parallel to the tank (10), an air filter box (30) parallel to both, and an engine block (40) inclined backwards at an angle (β) between 40 and 50º.

This achieves lowering the center of gravity of the motorcycle (1) obtaining great maneuverability and a significant improvement in the agility and stability of the whole while driving.

## Description

### Field of the invention.

The present invention refers to a motorcycle and particularly, but not exclusively, to a motorcycle of the *off-road type,* of compact configuration and great maneuverability.

The invention is of particular application in motorcycles of the *off-road* type, where it is necessary for the centre of gravity to be located at the lowest possible position. Although the term *off-road* includes motorcycles of the trial, cross-country race, enduro type, etc. that are generally used for riding on unpaved roadways, the invention is not limited to this type of motorcycles but it can be applied to any other type of motorcycle in which a geometry having a centre of gravity close to the ground is advantageous.

### Background of the invention.

Motorcycles, particularly those of the *off-road* type, typically have a configuration that is defined by a series of elements that are arranged in a determined relative position, which are generally fixed with respect to the chassis. These elements comprise, among others, a fuel tank, a radiator, an air filter box and an engine block. The design of the particular relative position of these elements determines a centre of gravity more or less appropriate for the objectives that are intended to be reached for the motorcycle (maneuverability, traction, etc.).

Generally, the design of these elements and their particular location in the motorcycle has as a main objective to maintain the concentration of the masses as close as possible to the centre of gravity and the in the lowest possible position of said centre of gravity and near the centre of the motorcycle, so that the weight distribution between both axles amounts to at least 50%. According to the particular use of the motorcycle, it could be convenient to increase or decrease the percentage at one of the axles.

An example of design for obtaining a low centre of gravity is the arrangement proposed in EP1873048. In said document, the fuel tank is mounted at the rear end of the motorcycle.

With the proposed arrangement, the lowering of the centre of gravity is achieved and greater traction is obtained by virtue of the arrangement of the heaviest weight at the rear wheel with respect to the front wheel. However, the whole is not as compact as it would be desirable and does not benefit from the space that is under the main chassis of the motorcycle.

Another proposed configuration applied to a motorcycle of the *off-road* type is described in US5016725, where a configuration in which the tank is in a lower position with the objective of lowering the centre of gravity of the whole is proposed. The main objection to this lower arrangement of the engine is that this takes up too large a space, which adds difficulty to the positioning of relatively large elements, such as the radiator.

The arrangement of the different elements forming part of a motorcycle (fuel tank, radiator, air filter box, engine block) is a critical aspect that influences the weight distribution and affects the position of the centre of gravity of the motorcycle, an aspect which is extremely important during the use of the same, especially in off-road applications. As has been seen, the known solutions for lowering the centre of gravity in a motorcycle involve some objections, as have been indicated, which can negatively affect the positioning of other elements.

The present invention proposes a motorcycle, for example of the off-road type, having an arrangement of the elements that is particularly adapted to provide a compact and maneuverable assembly, which achieves the objective of lowering the centre of gravity and that overcomes the objections arising from the arrangements of the prior art while obtaining other additional advantages, as will be detailed hereinafter.

### Brief description of the invention.

The present invention refers to a motorcycle, such as a motorcycle of the *off-road* type having a series of elements placed in a particular relative arrangement. Said elements, which will be referred to hereinafter, comprising, at least, the fuel tank, the radiator, the air filter box and the engine block of the motorcycle, all of them being mechanically joined by the chassis of the motorcycle.

The fuel tank comprises a filler mouth and a tank body. Said body of the tank is adapted to house the fuel and preferably has an elongated configuration in the direction of travel. In the arrangement that is described according to the invention, the body of the tank is attached to the chassis of the motorcycle in a frontal position next to the front wheel and in a substantially lower location with respect to the chassis.

Unlike the conventional location of the tank, typically on the upper part of the motorcycle, the invention proposes the arrangement of this element in a substantially lower zone and inclined forwards at an angle with respect to the direction of travel of the motorcycle, that is to say, inclined at such an angle that the front end of said body of the tank, according to the mentioned travel direction, is raised with respect to the opposite end of the same. In some embodiments of the invention the preferred angle of inclination of the body of the tank is between 60 and 70º.

With this position of the tank, the centre of gravity is significantly lowered, being lower and more advanced with respect to conventional motorcycles. By loading a little more weight in the front axle, greater maneuverability and increased effectiveness in the gearing is obtained with no need to extend the distance between the axles. Thanks to this relocation of the tank, a reduction of the fuel inertia effect during the steering is also obtained, which is especially advantageous in motorcycles of the off-road type. Another advantage of the configuration described is that it allows for situating a greater weight near the centre of gravity thus achieving a noticeable improvement in both the agility and stability of the motorcycle. The proposed arrangement also has the advantage that the fuel is far away from the heat emission points with respect to other conventional solutions.

The advantages indicated for the arrangement described for the tank are increased in the embodiment in which the air filter box is arranged substantially parallel to the body of the fuel tank, giving as a result a very compact assembly, which adds to the advantages relating to the above-mentioned maneuverability and stability of the whole.

It is preferable for the motorcycle according to the invention if the radiator is arranged substantially parallel also to the body of the fuel tank, behind the filter box. This ensures that the radiator is protected from entry of external elements, such as stones, soil and mud, which could lead to plugging it in certain situations.

In one embodiment of the invention, the engine block is arranged inclined backwards, unlike conventional engines that are typically arranged inclined forwards in the direction of travel. According to this characteristic of the motorcycle of the present invention, it is preferable for the engine block to be arranged with the cylinder inclined backwards at an angle ranging between 40 and 50º. The combination of this configuration of the engine block and the tank (with the filter box and the radiator), just as has been described previously, permits the engine to be placed closer to the front wheel, thus achieving a more maneuverable and compact whole.

In addition to the above, and also resulting from this particular arrangement of the engine block, it should be noted that the exhaust manifold can exit the cylinder directly backwards. This offers important advantages: it allows the engine to be placed closer to the front wheel, which was traditionally limited by the emission of exhausted gas, and allows for heat sources to be kept away from the fuel tank of the motorcycle, etc.

With the described configuration an assembly is obtained that provides even more advantages. For example, the air filter box can be arranged in an higher location (higher than in conventional motorcycles) so that the air intake remains located further from the ground with respect to the known solutions, which permits to submerge the motorcycle at a greater depth without risk of water entering the engine. This is of particular importance in off-road applications, along unpaved roadways.

It is also provided that the housing of the air filter box is arranged far away from the radiator, thus receiving fresh air without being heated by its influence or by the exhaust emissions. In this way, and in a general way, the different elements of the motorcycle according to the invention are located with dependence of the temperature at which they work. Thus, the petrol tank and the air filter box are arranged in a low temperature zone, the radiator and the cylinder are arranged in medium temperature zones (in the range of 100-110 ºC) and the exhaust pipe is arranged in a high temperature zone (in case it were catalyzed it could reach temperatures above 400 ºC).

With the described structural configuration, either in its basic embodiment (tank in inclined lower frontal position) as in any of the embodiments described (the combined structure including, in addition, the radiator, the filter box, the engine block, the exhaust pipe, etc.) an advantageous grouping of masses is obtained at the same time that the position of the centre of masses is lowered, contributing to the maneuverability, traction and stability of the motorcycle, especially in a motorcycle of the off-road type.

The following provides a description of the invention in a preferred embodiment thereof, from which other objectives, advantages and features of the motorcycle of the present invention will become clearer. The description given below is by way of non-limiting example and illustrated in the drawings that are included in the present specification.

### Brief description of drawings.

In these drawings,
Figure 1 is a first side elevational view of one embodiment of a motorcycle according to the invention;
Figure 2 is a second side elevational view of the embodiment of the motorcycle in figure 1; and;
Figure 3 is a perspective view of the motorcycle in figures 1 and 2.

### Detailed exposition of a preferred embodiment.

In the figures of the drawings that are included, a single-cylinder, two-stroke and injection motorcycle of the off-road type is illustrated, which has been designated as a whole by reference 1. Although the embodiment described below referring to these figures is for a motorcycle of the type illustrated (*off-road*, i.e., trial, cross, enduro, etc. type), the invention is not intended to be limited to such motorcycles, but is applicable to other types without other particular modifications.

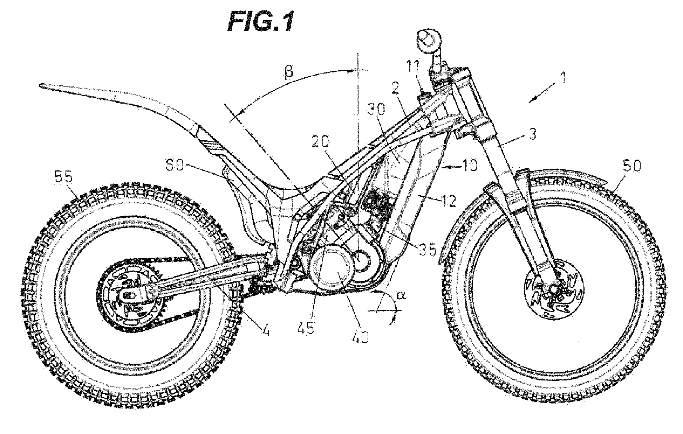

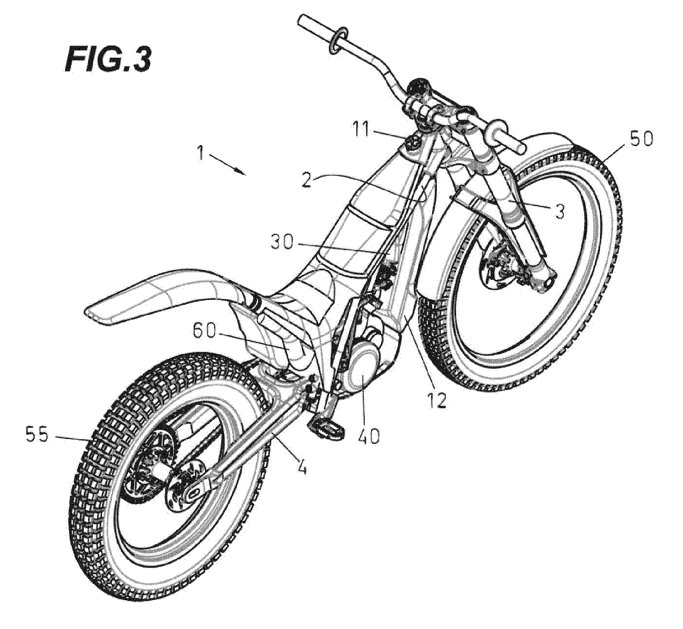

As can be seen in Figures 1-3, the motorcycle 1 includes a tubular chassis 2 with an inverted front fork 3 and a rear rocker 4 associated with the chassis 2, wherein the corresponding front and rear wheel 50, 55, respectively, are arranged. The chassis 2 of the motorcycle 1 holds the fuel tank 10, the radiator 20, the air filter box 30 and the engine block 40.

The following describes the particular arrangement of these elements 10, 20, 30, 40 in the chassis 2 of the motorcycle 1 of the embodiment shown as an example in figures 1-3.

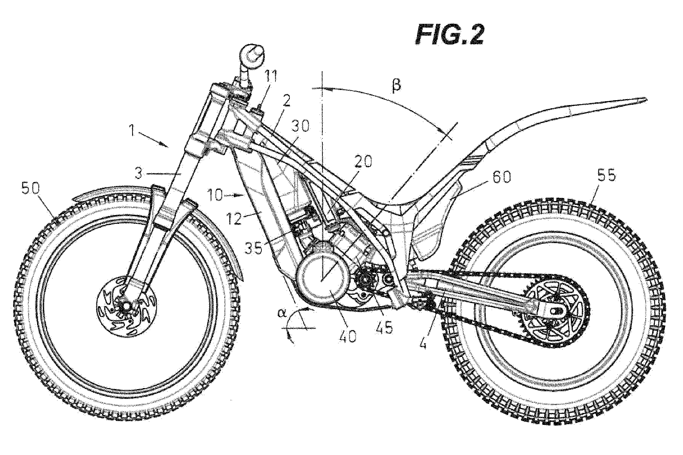

First, the fuel tank 10 of the motorcycle 1 includes an upper inlet 11 and the body 12 of the tank itself. Just as it can be appreciated in the figures 1 and 2 of the drawings, the body 12 of the tank 10 has a narrow and elongated configuration extending lengthwise in the direction of travel. The body 12 of the tank 10 in the motorcycle 1 of the invention is arranged in a frontal position substantially lower (substantially under the main structure of the chassis (2)), next to the front wheel 50 of the motorcycle 1, as it can be appreciated in the figures. According to said figures 1 and 2 of the drawings, the body 12 of the tank 10 is inclined forward at an angle α in the direction of travel of the motorcycle 1, relative to the horizontal, i.e. with the front part being raised with respect to the rear part of the body 12 of the tank 10. In the embodiment shown in said figures, the angle of inclination α of the body 12 of the tank 10 is between 60 and 70º which is the appropriate gap for mounting adjacent elements, such as the radiator 20 or the air filter box 30 in a motorcycle 1 of the off-road type illustrated as an example in the drawings. In the case illustrated, the radiator 20 of the motorcycle 1 is mounted behind the air filter box 30 (on which the corresponding inlet 35 is located), which in turn, is located behind the body 12 of the fuel tank 10, with the said elements 10, 20 30 being arranged in a position substantially parallel to each other and inclined according to said angle α. Although this inclination is preferred for the embodiment described according to the figures, other values for said angle of inclination α are not discarded, depending on the design and the characteristics required of a motorcycle 1.

On the whole comprising the tank, radiator, air filter box 10, 20, 30, of the motorcycle 1 illustrated, all the elements are substantially parallel to each other and inclined forward according to said angle α, which values range between 60 and 70º for the illustrated motorcycle example. As it has been indicated, the values for said angle of inclination α are preferred for the described embodiment and other values are not discarded in function of the design and the characteristics required of the motorcycle 1.

In the embodiment shown in the figures, the engine block 40 of the motorcycle 1 of the invention comprises a single cylinder 45. Said cylinder is arranged inclined backwards with respect to the travel direction of the motorcycle 1. The opposite inclination of the cylinder 45 relative to the assembly formed by the tank, radiator and air filter box 10, 20, 30 allows for attaching the assembly into a significantly compact design.

In the illustrated example, the inclination of the cylinder 45 in the engine block 40 is defined by an angle β between 40 and 50º from the vertical. It would also be understood that other embodiments, in which the engine block includes more than one cylinder, are also within the scope of the invention.

The arrangement of the motorcycle 1 that is described according to the attached figures includes also the exhaust system. In the said system, and thanks to the mentioned backward inclination of the engine block 40, the exhaust manifold 60 can exit the cylinder 45 directly backwards, thus avoiding bending the manifold 60 to direct the gases from front to rear as it occurs in the conventional motorcycles.

While this invention has been described in the specification and illustrated in the accompanying drawings with reference to a preferred embodiment thereof, the motorcycle, particularly of the off-road type, object of the invention is susceptible to various changes without departing from the scope of protection defined in the following claims.

## Claims

1. Motorcycle (1) comprising an arrangement of elements consisting of at least one chassis (2) and a fuel tank (10), **characterized in that** the fuel tank (10) comprises a body (12) arranged at a front location of the motorcycle (1) and inclined at an angle (α) so that the front end of said body (12), according to the direction of travel of the motorcycle (1), is raised as compared to a rear end thereof, and said body (12) being arranged in a position substantially lower than the chassis (2) of the motorcycle (1).

2. Motorcycle (1) as claimed in claim 1, wherein said body (12) of the fuel tank (10) has an elongated configuration.

3. Motorcycle (1) as claimed in claim 1 or claim 2, wherein said arrangement further comprises a radiator (20), said radiator (20) being arranged substantially parallel to the body (12) of the fuel tank (10).

4. Motorcycle (1) as claimed in any of the preceding claims, wherein said arrangement further comprises an air filter box (30), said air filter box (30) being arranged substantially parallel to the body (12) of the fuel tank (10).

5. Motorcycle (1) as claimed in any of the preceding claims, wherein said angle of inclination (α) of the body (12) of the tank (10) ranges between 60 and 70º.

6. Motorcycle (1) as claimed in any of the preceding claims, wherein said arrangement further comprises an engine block (40) arranged backwards inclined at an angle of inclination (β) with respect to the direction of travel of the motorcycle (1).

7. Motorcycle (1) as claimed in claim 6, wherein said angle of inclination (β) of the engine block (40) ranges between 40 and 70º.
